(19) Europäisches Patentamt / European Patent Office / Office européen des brevets

(11) **EP 3 542 665 A1**

(12) **EUROPEAN PATENT APPLICATION**

(43) Date of publication:
**25.09.2019 Bulletin 2019/39**

(51) Int Cl.:
*A45C 13/26* (2006.01)   *B25G 1/00* (2006.01)
*B25G 1/10* (2006.01)

(21) Application number: **18163093.0**

(22) Date of filing: **21.03.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Richemont International SA**
**1752 Villars-sur-Glane (CH)**

(72) Inventor: **DAGUET, Léo**
**01280 Prévessin Moëns (FR)**

(74) Representative: **Poindron, Cyrille et al**
**Novagraaf International SA**
**Chemin de l'Echo 3**
**1213 Onex (CH)**

(54) **HANDLE CORE AND HANDLE MANUFACTURING METHOD FOR A HAND LUGGAGE**

(57)   Method of manufacturing a handle core for a hand luggage, comprising the steps of:
- providing at least one dimension of a user's hand,
- generating a handle core model, based on said at least one provided dimension,
- manufacturing a hand luggage handle core, according to the handle core model.

Fig. 7

EP 3 542 665 A1

**Description**

The present invention relates to the manufacturing of a handle for a hand luggage. In particular, the present invention aims to provide a manufacturing method for a handle core, which will be further coated, treated, finished or wrapped to form a handle to be attached to a hand luggage, such as a leather luggage, a leather good with a handle, forming a hand bag or a suitcase.

It is important to propose a handle which is easy to grasp and hold for a user, so as to minimize any stress and discomfort. Document FR1112170A describes a moulding method to manufacture a handle dedicated to a user. However, this method is quite long to implement, requires multiple moulding steps, and might be not well perceived by the user who has to contact and press a deformable material for taking an initial print of his hand.

The present invention aims to address the above mentioned drawbacks of the prior art, and to propose first a method for manufacturing a dedicated or customized handle core of a hand luggage, which is easy and fast to implement, with limited and easy actions or requirements to supply from the user.

In this aim, a first aspect of the invention is a method of manufacturing a handle core for a hand luggage, comprising the steps of:

- providing at least one dimension of a user's hand,
- generating a handle core model, based on said at least one provided dimension,
- manufacturing a hand luggage handle core, according to the handle core model.

According to the above embodiment, the method simply requires a dimension of the user's hand to generate the handle core model (via computer aided technology for example) and to manufacture the handle core, which is limited involvement from the user, and the digital generation of the handle core model, taking into account this dimension, is fast. In other words, there is no moulding step of the user's hand.

Advantageously, the manufacturing step uses an additive technique. Such additive technique, or 3D printing, is easy to implement even in a shop or retailing centre to manufacture (in front of the client) the handle core, to personalize the hand luggage on demand. In addition, such additive technique is not limited to plastic materials, and might be implemented even for manufacturing a metallic handle core.

Advantageously, the step of providing at least one dimension of a user's hand is performed with a digital instrument having a display,
the method further comprising the steps of:

- displaying on the digital instrument the handle core model for a user review,
- receiving an agreement from the user via the digital instrument. The above embodiment is user friendly and allows the user to immediately see the handle core before manufacturing.

Advantageously, the method comprises a step of recording if the user is a left handed or right handed person, and the step of generating the handle core model might comprise a step of performing a mirror symmetry if the user is a left handed person.

Advantageously, the digital instrument is a hand held electronic device (such as a laptop computer, a tablet computer), or a check-in machine. This kind of digital instrument is easy to provide to the user. Advantageously, the screen is a touch screen.

Advantageously, the generation of the handle core model is performed with the digital instrument.

Advantageously, the method of manufacturing a handle core comprises an initial phase of collecting a set of anthropometrical data, and the step of generating the handle core model comprises a step of calculating a dimension of the handle core model taking into account at least one of the collected anthropometrical data. The method comprises an initial phase of gathering a set of measures of a sample of persons' hands and body measurements (with physical measures), to get an accurate and statistical set of data from a representative sample size, so as to be able to determine, with one measurement done on the user willing a dedicated handle, other measures or ranges of values needed for generating the handle core model. In other words, this initial phase of gathering (measuring from a representative sample of persons) anthropological data enables deducing relevant dimensions from the user, using only one measure of the user's body: less involvement of the user is needed, and only partial measures are still enough to generate the full handle core model.

Advantageously, the step of generating the handle core model comprises a step of calculating a radius (r) of a middle portion of the handle core, and wherein:

$$\frac{0.2 * l}{\pi} \leq r \leq \frac{0.4 * l}{\pi}$$

and more advantageously, wherein:

$$r = \frac{0.3 * l}{\pi}$$

with:

r: radius of the middle portion of the handle core (mm),
l: measured length of the user's hand from middle finger end to palm/wrist limit (mm). Advantageously, the calculated radius r is the radius of the handle core model in its middle portion.

As an example, with a hand length of 178 mm, in the above formula, a factor of 0.2 leads to a handle core diameter of 2.3 cm, a factor of 0.3 leads to a handle core diameter of 3.4 cm, a factor of 0.4 leads to a handle core diameter of 4.6 cm

Advantageously, the method of manufacturing a handle core comprises, before the step of receiving the user's agreement, a step of receiving a request for modification of the displayed handle core model and a step of recalculating at least one of the dimensions of the handle core model. The method comprises a step of taking into account a request for modification, which can be easily made when the handle core model is displayed, so as to further customize the handle core. Therefore, the final handle will offer optimized ergonomics / comfort to the user.

Advantageously:

the step of displaying the handle core model comprises:

- a step of displaying the handle core model, and/or a cross section of the handle core model, and/or a profile of the handle core model on a touch screen,

the step of receiving a request for modification comprises:

- a step of measuring a displacement of at least one contact on the touch screen of a user's finger,

the step of recalculating at least one dimension of the handle core model taking into account the measured displacement. In other words, the user can pinch or slide the handle core model or specific points of the handle core model to customize the handle core model.

Advantageously, the method of manufacturing a handle core comprises a step of displaying the recalculated handle core model before receiving the user's agreement.

Advantageously, the recalculated dimension is limited to differ from the initially generated dimension of ±20% maximum. To still insure correct ergonomics, the handle core cannot be (too) severely modified with the ±20% limits.

Advantageously, the recalculated dimension is a height of an axial bump arranged to face a user's palm or user's finger articulation, or a depth of a transverse notch arranged to face a user's finger.

Advantageously, the handle core model comprises:

- a bump arranged to face a user's palm or user's finger articulation, and/or
- at least one transverse notch arranged to face a user's finger,

and the step of receiving a request for modification of the displayed handle core model comprises a step of receiving a request for accentuating or minimizing the bump and/or the transverse notch.

In other words, the user can accentuate or minimize:

- the bump which will fit into the palm of his hand, and/or;
- the notch(es) where his fingers will fall into.

Advantageously, the step of providing at least one dimension of the user's hand with the digital instrument comprises the steps of:

- detecting a contact of the user's hand to be measured on the display,
- displaying hand limits on the display,
- authorizing displacement of the hand limits by a contact of the user on the display,
- deducing the user's hand dimension based on a final position of the hand limits on the display. The hands limits can be represented as limit lines, which have to be adjacent or tangent to the user hand placed on the screen. Advantageously, the method displays four hand limits (two vertical and two horizontal) and authorizes a sliding of the hand limits in only one direction, preferably transverse to the hand limit.

Advantageously, the step of providing at least one dimension of the user's hand with the digital instrument comprises the steps of:

- displaying a target where the user shall place his hand on the display of the digital instrument. The displayed target helps to correctly position the user's hand.

Alternatively or in addition, the step of providing at least one dimension of the user's hand with the digital instrument comprises the steps of:

- taking a picture of the user's hand, or
- positioning the user's hand between a camera and a contrasting background, and detecting the user's hand based on a contrast analysis.

A second aspect of the invention relates to a method of manufacturing a handle for a hand luggage, comprising the method of manufacturing a handle core according to the first aspect of the invention, and comprising a step of coating an external surface of the handle core, or applying a surface treatment to an external surface of the handle core, or performing a surface finishing, or wrapping the handle core with an external layer or sheath. The handle core might be painted, polished, coated with Physical vapor deposition (PVD), anodized, wrapped with leather, fabric... to obtain the final handle for the hand luggage.

Advantageously, the method of manufacturing a handle comprises:

- a step of acquiring a user's height or a user's hand-to-ground distance,
- a step of determining an orientation angle ($\alpha$) between the handle core and a connecting rod of the hand luggage, taking into account the user's height or user's hand-to-ground distance,
- a step of assembling the handle core onto the connecting rod of the hand luggage, with respect of the orientation angle ($\alpha$). The method, based on the user's height or user's hand-to-ground distance (which can be measured or deduced from another measured dimension of the user), calculates the optimum angle between the handle core (having an angular feature, such as a bump to face user's palm or a notch to face user's finger) and the connecting rod of the hand luggage (typically a roller suitcase in this embodiment).

Advantageously, the determined orientation angle ($\alpha$) between the handle core and a connecting rod of the hand luggage is respecting the following formula:

$$\arcsin(\frac{0.250 * h}{Dh}) \leq \alpha \leq \arcsin(\frac{0.460 * h}{Dh})$$

and more advantageously, wherein:

$$\alpha = \arcsin(\frac{0.377 * h}{Dh})$$

with:

h: user's height (mm),
Dh: Deployed height of the hand luggage (mm).

Advantageously, the method of manufacturing a handle comprises:

- a step of determining an axial angle between the handle core and a mono-connecting rod,
- a step of assembling the handle core onto the mono-connecting rod of the hand luggage, with respect of the axial angle. In the case where the hand luggage is a roller suitcase having a single connecting rod between the luggage and the handle, the method authorizes to customize the axial angle, being an angle, in a plane perpendicular to the mono-connecting rod, between a longitudinal axis of the handle and a projection of a front or rear side of the luggage.

A third aspect of the invention relates to a hand luggage, comprising a handle manufactured according to the second aspect of the invention.

Other features and advantages of the present invention will appear more clearly from the following detailed description of particular non-limitative examples of the invention, illustrated by the appended drawings where:

- figure 1 represents a general view of a hand luggage equipped with a handle ;

- figure 2 represents a front view of a handle core of the handle of figure 1;

- figure 3 represents an alternative of a handle core for a hand luggage;

- figures 4a and 4b represent a cross section of the handle core of figure 2 or 3;

- figure 5 represents body dimensions of a user, used for the method of manufacturing the handle core of figures 2, 3, 4a, 4b;

- figure 6 represents an assembly of the handle core shown figures 4a, 4b, on a connecting rod of the luggage of figure 1;

- figure 7 shows steps of the method of manufacturing the handle core and handle of figure 1.

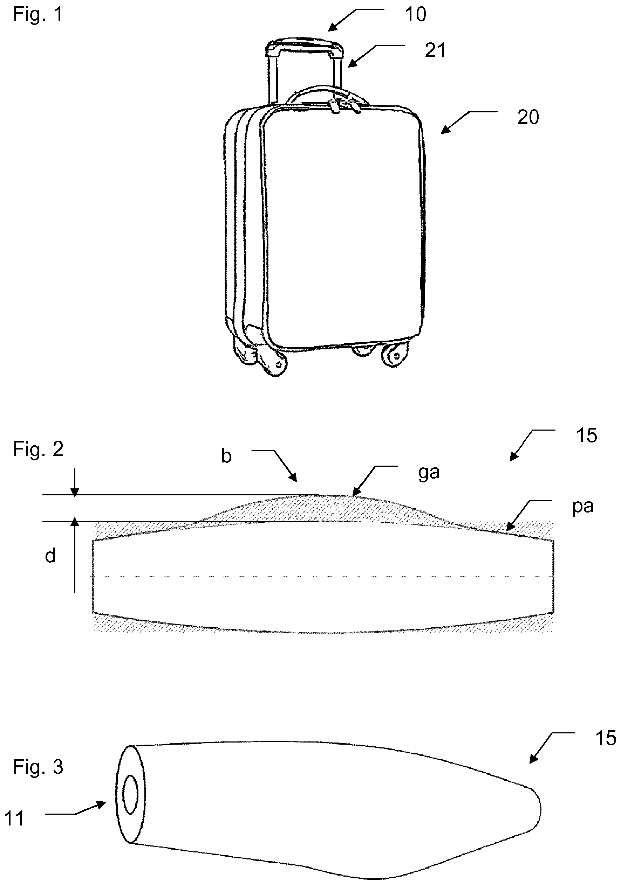

Figure 1 shows a hand luggage 20 (a roller suitcase in the present case), comprising a handle 10 attached to two connecting rods 21 of the hand luggage 20. It is to be understood that the hand luggage might be a hand bag, a suitcase, a briefcase, manufactured with fabric, leather or other materials. There might be also only one or no connecting rods contrary to the present embodiment.

The invention aims to provide an ergonomic and comfortable handle, manufactured specifically to the user's morphology.

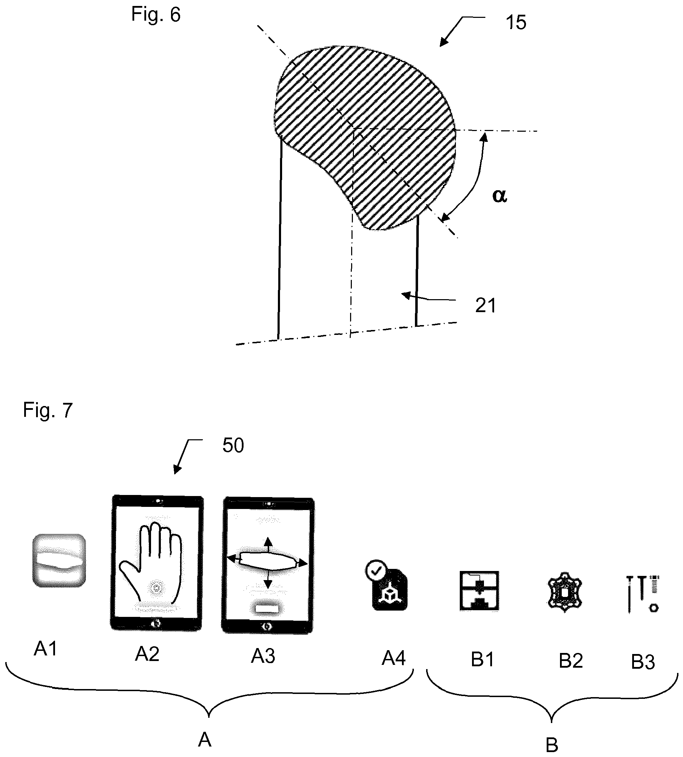

In this aim, figure 7 shows an example of the method according to the invention, with a phase A where dimensions of the user body (and hand in particular) are gathered/measured, and a phase B, where an handle core 15 and handle 10 are manufactured.

In present embodiment, the method is carried out through a computer tablet 50, but it can be equally ran with a laptop, a check in machine: a digital instrument, in other words.

Phase A starts as shown figure A1 where users clicks an icon to launch a dedicated application.

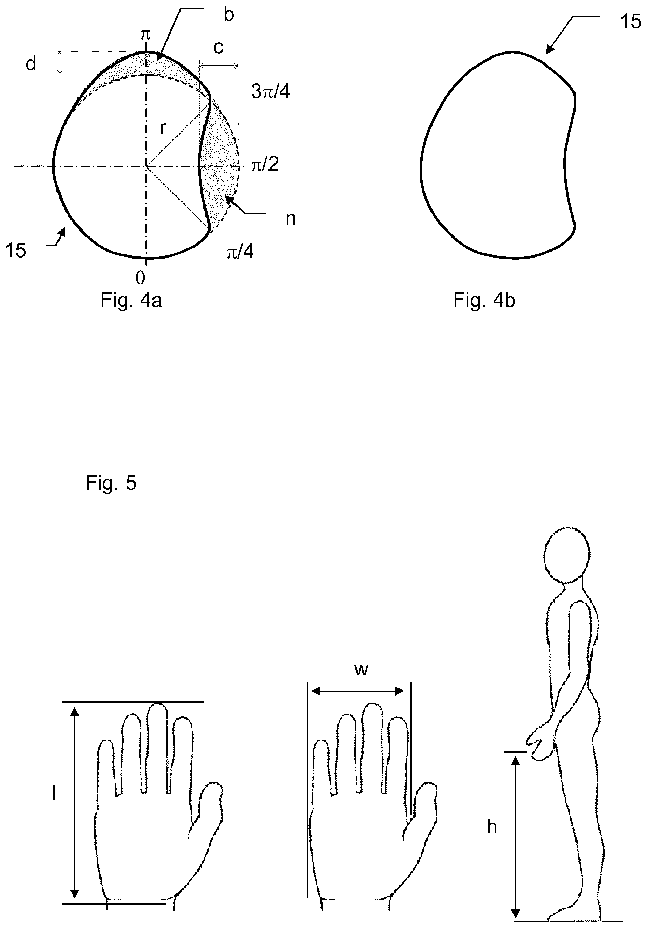

Figure A2 shows the user placing his hand onto the display and adjusting the position of displayed hand limits to be tangent or adjacent to his hand, so that the system (the computer tablet or a remote server) can deduct hand dimensions from this measure, such as hand length (l) or hand width (w) as shown figure 5. In this step, the user can also fill in his height or hand distance (h) with ground (also shown figure 5). Picture analysis can also be used to deduce the hand or user dimensions.

From these data, the system can generate a handle core model dedicated to the user, shown on figure A3 on the display of the computer tablet 50. The arrows show also the possibility for the user to modify, on the touch screen, the handle core model being further customized.

Figure A4 shows an agreement given by the user, to freeze the handle core model dimensions.

Figure B1 shows schematically a 3D printer, to build the handle core 15 according to the handle core model specifications and dimensions.

Leather logo figure B2 designates a step of manufacturing the final handle 10 (typically, the handle core 15 is wrapped into a leather foil, but it can be painted, coated or finished with polishing for example).

Figure B3 shows the final assembly of the handle 10 onto the hand luggage 20.

Figure 2 shows a typical shape of a handle core manufactured according to the invention. Lower portion and upper side portions of the external surface present a parabolic shape pa. The upper central portion presents a bump b extending partially along the handle core length, with a Gaussian shape ga, and protruding of a distance d.

Figure 3 shows an alternative shape for the handle core 15, with a hole 11 for attachment to the connecting rod 21 of figure 1. In this embodiment, the handle core 15 is attached only via its left side of figure 3, to a mono-connection rod (in other words, the suitcase or hand luggage 20 comprise only one connecting rod 21).

Figures 4a and 4b show a cross section of the handle core 15 (figure 4a with dimensions, figure 4b, only the outer perimeter), comprising a bump b arranged to be in regards of a user's palm or fingers' articulation or joint. The bump b is protruding by a distance d from a nominal radius r, d being greater than r/10.

The handle core 15 can also be shaped so as to present notches n, arranged to face fingers of the user. These notches n might present an angular height of 90° ± 30°, and a depth c, being up to r/2. The longitudinal spacing of the notches might be determined according to the hand's width w, to be approx. equal to a third of width w.

The method calculates the nominal radius r according to the below specification:

$$\frac{0.2 * l}{\pi} \leq r \leq \frac{0.4 * l}{\pi}$$

and in particular:

$$r = \frac{0.3 * l}{\pi}$$

with:

r: radius of the center of the handle core (mm),
l: measured length of the user's hand (mm).

To present an optimal grip when the user pulls the roller suitcase of figure 1, the method also determines an angle α shown figure 6. Left side of figure 6 being the user's side, and right side of the figure being the suitcase side. Taking advantage of the ground's hand height h shown figure 5, the method calculates the angle α following the following criteria:

$$\arcsin(\frac{0.250 * h}{Dh}) \leq \alpha \leq \arcsin(\frac{0.460 * h}{Dh})$$

and more advantageously:

$$\alpha = \arcsin(\frac{0.377 * h}{Dh})$$

with:

h: user's height (mm),
Dh: Deployed height of the hand luggage (mm) (full height when the connecting rods 21 are fully extended).

Consequently, after assembly of the handle core 15 according to this specification, and when pulling the hand luggage 20, the user's fingers will naturally face the notches n and bump b, avoiding any discomfort of use.

In particular, the method also comprises the step of recording if the user is left handed or right handed to adequately adapt the handle core model. if the user is left handed, at least on mirror symmetry might be performed to the handle core model, which might be primarily built on statistical data for right handed persons.

It is of course understood that obvious improvements and/or modifications for one skilled in the art may be implemented, still being under the scope of the invention as it is defined by the appended claims.

**Claims**

1. Method of manufacturing a handle core (15) for a hand luggage (20), comprising the steps of:

- providing at least one dimension of a user's hand,
- generating a handle core model, based on said at least one provided dimension,
- manufacturing a hand luggage (20) handle core (15), according to the handle core model.

2. Method of manufacturing a handle core (15) according to the preceding claim, wherein the manufacturing step uses an additive technique.

3. Method of manufacturing a handle core (15) according to any one of the preceding claims, wherein the step of providing at least one dimension of a user's hand is performed with a digital instrument having a display, the method further comprising the steps of:

- displaying on the digital instrument the handle core model for a user review,
- receiving an agreement from the user via the digital instrument.

4. Method of manufacturing a handle core (15) according to any one of the preceding claims, comprising an initial phase of collecting a set of anthropometrical data, wherein the step of generating the handle core model comprises a step of calculating a dimension of the handle core model taking into account at least one of the collected anthropometrical data.

5. Method of manufacturing a handle core (15) according to any one of the preceding claims, wherein the step of generating the handle core model comprises a step of calculating a radius (r) of middle portion of the handle core (15), and wherein:

$$\frac{0.2 * l}{\pi} \leq r \leq \frac{0.4 * l}{\pi}$$

and more advantageously, wherein:

$$r = \frac{0.3 * l}{\pi}$$

with:

r: radius of the middle portion of the handle core (mm),
l: measured length of the user's hand (mm).

6. Method of manufacturing a handle core (15) according to claim 3 or according to any one of the claims 4 to 5 in their dependency to claim 3, comprising, before the step of receiving the user's agreement, a step of receiving a request for modification of the displayed handle core model and a step of recalculating at least one of the dimensions of the handle core model.

7. Method of manufacturing a handle core (15) according to the preceding claim, wherein the step of displaying the handle core model comprises:

- a step of displaying the handle core model, and/or a cross section of the handle core model, and/or a profile of the handle core model on a touch screen,

the step of receiving a request for modification comprises:

- a step of measuring a displacement of at least one contact on the touch screen of a user's finger,

the step of recalculating at least one dimension of the handle core model taking into account the measured displacement.

8. Method of manufacturing a handle core (15) according to any one of the claims 6 to 7, wherein the recalculated dimension is limited to differ from the initially generated dimension of ±20% maximum.

7

**9.** Method of manufacturing a handle core (15) according to any one of the claims 6 to 8, wherein the handle core model comprises:

- a bump arranged to face a user's palm or user's finger articulation, and/or
- at least one transverse notch arranged to face a user's finger,

and wherein the step of receiving a request for modification of the displayed handle core model comprises a step of receiving a request for accentuating or minimizing the bump and/or the transverse notch.

**10.** Method of manufacturing a handle core (15) according to claim 3 or according to any one of the claims 4 to 9 in their dependency to claim 3, wherein the step of providing at least one dimension of the user's hand with the digital instrument comprises the steps of:

- detecting a contact of the user's hand to be measured on the display,
- displaying hand limits on the display,
- authorizing displacement of the hand limits by a contact of the user on the display,
- deducing the user's hand dimension based on a final position of the hand limits on the display.

**11.** Method of manufacturing a handle for a hand luggage (20), comprising the method of manufacturing a handle core (15) according to any one of the claims 1 to 10, and comprising a step of coating an external surface of the handle core (15), or applying a surface treatment to an external surface of the handle core (15), or performing a surface finishing, or wrapping the handle core (15) with an external layer or sheath.

**12.** Method of manufacturing a handle according to the preceding claim, comprising:

- a step of acquiring a user's height or a user's hand-to-ground distance,
- a step of determining an orientation angle ($\alpha$) between the handle core (15) and a connecting rod (21) of the hand luggage (20), taking into account the user's height or user's hand-to-ground distance,
- a step of assembling the handle core (15) onto the connecting rod (21) of the hand luggage (20), with respect of the orientation angle ($\alpha$).

**13.** Method of manufacturing a handle according to the preceding claim, wherein the determined orientation angle ($\alpha$) between the handle core (15) and a connecting rod (21) of the hand luggage (20) is respecting the following formula:

$$\arcsin(\frac{0.250 * h}{Dh}) \leq \alpha \leq \arcsin(\frac{0.460 * h}{Dh})$$

and more advantageously, wherein:

$$\alpha = \arcsin(\frac{0.377 * h}{Dh})$$

with:

h: user's height (mm),
Dh: Deployed height of the hand luggage (20) (mm).

**14.** Method of manufacturing a handle according to any one of the claims 11 to 13, and comprising:

- a step of determining an axial angle between the handle core (15) and a mono-connecting rod (21),
- a step of assembling the handle core (15) onto the mono-connecting rod (21) of the hand luggage (20), with respect of the axial angle.

**15.** Hand luggage (20), comprising a handle manufactured according to any one of the claims 11 to 14.

Fig. 1

10

21

20

Fig. 2

15

b

ga

pa

d

Fig. 3

15

11

Fig. 4a

Fig. 4b

Fig. 5

Fig. 6

15

21

α

Fig. 7

50

A1   A2   A3   A4   B1   B2   B3

A   B

Europäisches
Patentamt

European
Patent Office

Office européen
des brevets

# EUROPEAN SEARCH REPORT

**Application Number**

EP 18 16 3093

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2006/137144 A1 (TILLIM STEPHEN L [US] ET AL) 29 June 2006 (2006-06-29) | 1,4 | INV.<br>A45C13/26 |
| Y | * paragraph [0113] - paragraph [0119]; figures 6, 7 *<br>* paragraph [0169] - paragraph [0170]; figures 16c, 31 * | 2,3,5-15 | B25G1/00<br>B25G1/10 |
| | ----- | | |
| Y | WO 2016/154340 A1 (NEXTGEN KNIVES LLC [US]) 29 September 2016 (2016-09-29)<br>* paragraph [0093] - paragraph [0099]; figure 15 * | 2,3,5-15 | |
| | ----- | | |

**TECHNICAL FIELDS SEARCHED (IPC)**

A45C
B25G

The present search report has been drawn up for all claims

| Place of search | Date of completion of the search | Examiner |
|---|---|---|
| The Hague | 10 July 2018 | Ehrsam, Sabine |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 16 3093

This annex lists the patent family members relating to the patent documents cited in the above-mentioned European search report.
The members are as contained in the European Patent Office EDP file on
The European Patent Office is in no way liable for these particulars which are merely given for the purpose of information.

10-07-2018

| Patent document cited in search report | Publication date | Patent family member(s) | Publication date |
|---|---|---|---|
| US 2006137144 A1 | 29-06-2006 | EP 1832318 A2 <br> US 2006137144 A1 | 12-09-2007 <br> 29-06-2006 |
| WO 2016154340 A1 | 29-09-2016 | US 2018169852 A1 <br> WO 2016154340 A1 | 21-06-2018 <br> 29-09-2016 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 1112170 A